# EUROPEAN PATENT APPLICATION

(11) **EP 4 462 228 A1**
(43) Date of publication of application: **13.11.2024**
(21) Application number: 24160164.0
(22) Date of filing: 28.02.2024
(51) Int. Cl.: G06F 1/18, G06F 13/40

(54) **DISPLAY CARD MODULE AND ELECTRONIC DEVICE**

(30) Priority: 12.05.2023 CN 202321151730 U
(71) Applicant: Asus Global Pte. Ltd., 486035 Singapore (SG)
(72) Inventor: YAO, Jingwen, SINGAPORE 486035 (SG); LU, Yang, SINGAPORE 486035 (SG); SHAO, Guibing, SINGAPORE 486035 (SG)
(74) Representative: Becker, Eberhard

(57) **Abstract**

The disclosure provides a display card module (100), which includes a display card body (110), a graphics processor (120), and a first slot (130). The display card body (110) includes a gold finger assembly (111), and the gold finger assembly (111) includes a first portion (111a) and a second portion (111b). The graphics processor (120) is disposed on the display card body (110) and electrically connected to the first portion (111a). The first slot (130) is disposed on the display card body (110) and electrically connected to the second portion (111b). An electronic device (10) including the display card module (100) is also mentioned.

## Description

### BACKGROUND

### Technical Field

The disclosure relates to a display card module and an electronic device, and particularly relates to a display card module having a slot and an electronic device having the display card module.

### Description of Related Art

With the advancement of technological development and the improvement of user requirements, electronic devices are gradually becoming thin and light, causing the size of the motherboard and other internal components of the electronic device to shrink as well. However, such development also makes it difficult for users to expand the performance of electronic devices. For example, due to the size limitation of an ITX motherboard, the number of PCI-E slots or m.2 slots that can be installed thereon is limited. Therefore, it is difficult to add additional PCI-E slots or m.2 slots to the ITX motherboard, and it is also difficult to further expand the performance of electronic devices. Although you can directly change a solid-state drive slot on the ITX motherboard to a SATA interface solid-state drive slot, the performance of SATA type solid-state drive is limited and the user experience of using the solid-state drive is affected.

### SUMMARY

The disclosure provides a display card module, which includes a display card body, a graphics processor, and a first slot. The display card body includes a gold finger assembly, and the gold finger assembly includes a first portion and a second portion. The graphics processor is disposed on the display card body and electrically connected to the first portion. The first slot is disposed on the display card body and electrically connected to the second portion.

The disclosure provides an electronic device, which includes a motherboard and the display card module. The motherboard includes PCI-E slots. The setting of the PCI-E interface in the basic input/output system (BIOS) of the motherboard is selectively adjusted to the first mode or the second mode. The display card module is pluggably connected to the PCI-E slot.

Based on the above, the display card module in the disclosure is provided with a first slot, and the first slot is electrically connected to the gold finger assembly. Users can directly plug the expansion component into the display card body through the first slot, allowing users to expand the performance of the electronic device through the display card module of the disclosure. Also, since the performance of the electronic device can be expanded without changing the slot on the motherboard, the user experience in expanding the performance of the electronic device is not affected.

To make the aforementioned more comprehensive, several embodiments accompanied with drawings are described in detail as follows.

### BRIEF DESCRIPTION OF THE DRAWINGS

FIG. 1 is a schematic diagram of a display card module inserted into a motherboard according to an embodiment of the present application.
FIG. 2 is a schematic diagram of a display card module inserted into a motherboard according to another embodiment of the present application.

### DESCRIPTION OF THE EMBODIMENTS

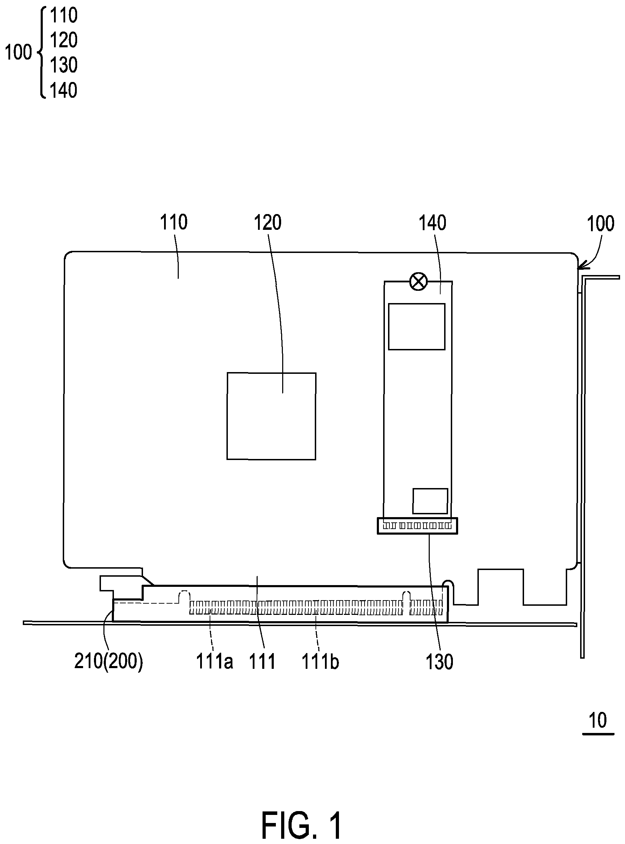

FIG. 1 is a schematic diagram of a display card module inserted into a motherboard according to an embodiment of the present invention. It should be noted that, for simplicity and clarity of illustration, FIG. 1 only schematically shows the outer outline of a display card body 110.

Please refer to FIG. 1. An electronic device 10 of this embodiment includes a motherboard 200 and a display card module 100. The motherboard 200 includes a PCI-E slot 210. The display card module 100 is pluggably connected to the PCI-E slot 210. In other embodiments, the display card module 100 may also be connected to other types of slots, and the disclosure does not limit the types of slots to which the display card module 100 is connected.

The display card module 100 (FIG. 1) of this embodiment includes the display card body 110, a graphics processor 120, and a first slot 130. The display card body 110 includes a gold finger assembly 111, and the gold finger assembly 111 includes a first portion 111a and a second portion 111b. The channel of the gold finger assembly 111 of this embodiment is, for example, PCI-E x16, the channel of the first portion 111a is, for example, PCI-E x8, and the channel of the second portion 111b is, for example, PCI-E x4 or PCI-E x8. However, the disclosure is not limited thereto. The graphics processor 120 is disposed on the display card body 110 and electrically connected to the first portion 111a of the gold finger assembly 111. The first slot 130 is disposed on the display card body 110 and electrically connected to the second portion 111b of the gold finger assembly 111. The first slot 130 is an m.2 slot, but this case does not limit the type of the first slot 130.

In addition, the display card module 100 (FIG. 1) of this embodiment also includes a first external member 140, which is detachably plugged into the first slot 130. The first external member 140 includes a solid-state drive, an m.2-SATA riser card, or an m.2-USB riser card. In FIG. 1, the first external member 140 is shown as a solid-state drive, but the disclosure does not limit the type of the first external member 140, as long as the first external member 140 may be plugged into the first slot 130 and electrically connected to the gold finger assembly 111.

Specifically, the setting of the PCI-E interface in the basic input/output system (BIOS) of the motherboard 200 is selectively adjusted to a first mode or a second mode. It should be noted that the PCI-E interface here refers to the signal transmission mode between the display card module 100 and the motherboard 200, rather than the specific slot structure. When the electronic device 10 starts up, the BIOS determines whether the first external member 140 is plugged into the first slot 130 to adjust the mode of the PCI-E interface. If the first external member 140 is not plugged into the first slot 130 when the electronic device 10 is started, the BIOS adjusts the PCI-E interface to the first mode. If the first external member 140 is plugged into the first slot 130 when the electronic device 10 is started, the BIOS adjusts the PCI-E interface to the second mode. In the first mode, the channel of the PCI-E interface is, for example, PCI-E x16. In the second mode, the channels of the PCI-E interface are, for example, divided into two PCI-E x8. Under such setting, the BIOS of the motherboard 200 can adjust the setting of the PCI-E interface according to whether the first external member 140 is plugged into the first slot 130, so that the channel of the PCI-E interface corresponds to the channel used by the assembly on the display card module 100 (FIG. 1).

Specifically, if the first external member 140 is not plugged into the first slot 130, since merely the graphics processor 120 is electrically connected to the motherboard 200 through the gold finger assembly 111, all channels of the PCI-E interface may be used for the graphics processor 120. If the first external member 140 is plugged into the first slot 130, the graphics processor 120 and the first external member 140 are electrically connected to the motherboard 200 through the first portion 111a and the second portion 111b of the gold finger assembly 111 respectively. Since the channel of the first portion 111a corresponding to the graphics processor 120 is PCI-E x8, half of the channels of the PCI-E interface (PCI-E x8) may be used by the graphics processor 120, and the other half of the channels of the PCI-E interface (PCI -E x8) may be used by the first external member 140. That is to say, the first external member 140 of this embodiment is electrically connected to the motherboard 200 through extra channels, so that the first external member 140 can expand the performance of the electronic device 10 (FIG. 1) through the display card module 100 (FIG. 1).

In other embodiments, the BIOS of the motherboard 200 may also directly preset the channels of the PCI-E interface to two PCI-E x8. Regardless of whether the first external member 140 is plugged into the first slot 130 or not, the graphics processor 120 merely uses half of the channels of the PCI-E interface (PCI-E x8), and the first external member 140 merely uses the other half of the channels of the PCI-E interface (PCI-E x8). In this way, the first external member 140 is not limited to be applied to the motherboard 200 that needs to have two modes.

The display card body 110 of the display card module 100 (FIG. 1) of this embodiment is provided with the first slot 130. The first external member 140 may be plugged into the first slot 130 and transmit data to the motherboard 200 through the channel of the second portion 111b of the gold finger assembly 111. Through such a design, the first external member 140 can expand the performance of the electronic device 10 (FIG. 1) through the display card module 100. In addition, since the slots on the motherboard 200 do not need to be changed to expand the performance of the electronic device 10, the user experience in expanding the performance of the electronic device 10 is not affected.

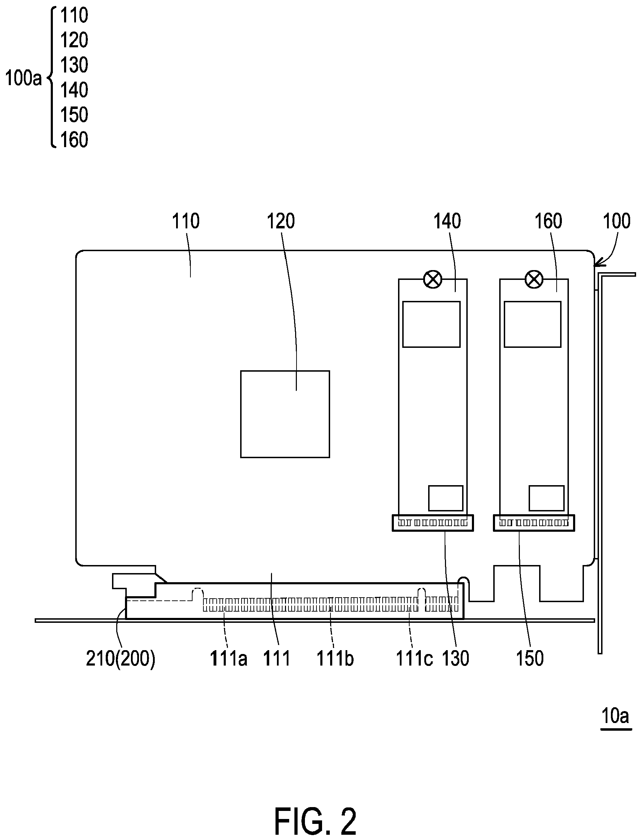

FIG. 2 is a schematic diagram of a display card module inserted into a motherboard according to another embodiment of the present application. Similarly, for simplicity and clarity of illustration, FIG. 2 only schematically shows the outer outline of the display card body 110.

Please refer to FIG. 2. The structure of a display card module 100a of this embodiment is similar to the structure of the display card module 100 (FIG. 1), and the difference between the two is that, the display card module 100a of this embodiment also includes a second slot 150 and a second external member 160. The second slot 150 is disposed on the display card body 110. The second external member 160 is detachably plugged into the second slot 150, and the second external member 160 includes a solid-state drive, an m.2-SATA riser card, or an m.2-USB riser card. In FIG. 2, the second external member 160 is shown as a solid-state drive, and the second slot 150 is shown as an m.2 slot, but the disclosure is not limited thereto.

In addition, the gold finger assembly 111 of this embodiment includes a third portion 111c (FIG. 2), and the second slot 150 (FIG. 2) is electrically connected to the third portion 111c. In this embodiment, the channel of the gold finger assembly 111 is, for example, PCI-E x16, the channel of the first portion 111a is, for example, PCI-E x8, the channel of the second portion 111b is, for example, PCI-E x4, and the channel of the third portion 111c is, for example, PCI-E x4. However, the disclosure is not limited thereto.

Specifically, as mentioned above, the setting of the PCI-E interface in the BIOS of the motherboard 200 is selectively adjusted to the first mode or the second mode. The specific descriptions of the first mode and the second mode are as mentioned above, and will not be repeated here. In this embodiment, the setting of the PCI-E interface in the BIOS of the motherboard 200 is also selectively adjusted to a third mode. In the third mode, the channels of the PCI-E interface are divided into one PCI-E x8 and two PCI-E x4. When the electronic device 10 starts up, the BIOS of the motherboard 200 adjusts the setting of the PCI-E interface according to whether the first external member 140 is plugged into the first slot 130 and whether the second external member 160 (FIG. 2) is plugged into the second slot 150 (FIG. 2), so that the channel of the PCI-E interface corresponds to the channel used by the assembly on the display card module 100a (FIG. 2).

In detail, when the first external member 140 is plugged into the first slot 130 and the second external member 160 (FIG. 2) is plugged into the second slot 150 (FIG. 2), the graphics processor 120, the first external member 140, and the second external member 160 are electrically connected to the motherboard 200 through the first portion 111a, the second portion 111b, and the third portion 111c (FIG. 2) of the gold finger assembly 111 respectively. Since the channel of the first portion 111a corresponding to the graphics processor 120 is PCI-E x8, and the channel actually used by each m.2 slot is PCI-E x4, half of the channels of the PCI-E interface (PCI-E x8) may be used by the graphics processor 120, and the remaining channels of the PCI-E interface (two PCI-E x4) may be used by the first external member 140 and the second external member 160 respectively. That is to say, the first external member 140 and the second external member 160 of this embodiment may be electrically connected to the motherboard 200 through extra channels, so that the first external member 140 and the second external member 160 can simultaneously expand the performance of an electronic device 10a (FIG. 2) through the display card module 100a (FIG. 2).

The display card module 100a (FIG. 2) of this embodiment is provided with the second slot 150 (FIG. 2). The second external member 160 (FIG. 2) may be plugged into the second slot 150 and transmit data to the motherboard 200 through the channel of the third portion 111c (FIG. 2) of the gold finger assembly 111. Through such a design, the first external member 140 and the second external member 160 can expand the performance of the electronic device 10a (FIG. 2) through the display card module 100a.

In other embodiments, the BIOS of the motherboard 200 may also directly preset the channels of the PCI-E interface to one PCI-E x8 and two PCI-E x4. Regardless of whether the first external member 140 and the second external member 160 are plugged into the first slot 130 and the second slot 150, the graphics processor 120 merely uses half of the channels of the PCI-E interface (PCI-E x8). The first external member 140 and the second external member 160 each merely use the remaining channels of the PCI-E interface (PCI-E x4). In this way, the first external member 140 and the second external member 160 are not limited to be applied to the motherboard 200 that needs to have three modes.

In addition, it should be noted that, the disclosure also does not limit the positions of the first slot 130 and the second slot 150 disposed on the display card body 110.

In summary, in an embodiment of the disclosure, the display card body is provided with the first slot. The first external member may be plugged into the first slot and transmit data to the motherboard through the channel of the second portion of the gold finger assembly. Through such a design, the first external members can expand the performance of the electronic device through the display card module. In addition, since the slots on the motherboard do not need to be changed, the user experience in expanding the performance of electronic devices is not affected. In addition, in another embodiment of the disclosure, the display card body is provided with a first slot and a second slot at the same time. The second external member may be plugged into the second slot and transmit data to the motherboard through the channel of the third portion of the gold finger assembly. Through such a design, the first external member and the second external member can simultaneously expand the performance of the electronic device through the display card module.

## Claims

1. A display card module (100), comprising:
a display card body (110) comprising a gold finger assembly (111), wherein the gold finger assembly (111) comprises a first portion (111a) and a second portion (111b);
a graphics processor (120) disposed on the display card body (110) and electrically connected to the first portion (111a); and
a first slot (130) disposed on the display card body (110) and electrically connected to the second portion (111b).

2. The display card module (100) according to claim 1, wherein the first slot (130) is an m.2 slot.

3. The display card module (100) according to claim 1, further comprising a first external member (140) detachably plugged into the first slot (130), wherein the first external member (140) comprises a solid-state drive, an m.2-SATA riser card, or an m.2-USB riser card.

4. The display card module (100) according to claim 1, wherein a channel of the gold finger assembly (111) is PCI-E x16, a channel of the first portion (111a) is PCI-E x8, and a channel of the second portion (111b) is PCI -E x4 or PCI-E x8.

5. The display card module (100) according to claim 1, further comprising a second slot (150) disposed on the display card body (110), wherein the gold finger assembly (111) comprises a third portion (111c), and the second slot (150) is electrically connected to the third portion (111c).

6. The display card module (100) according to claim 5, further comprising a second external member (160) detachably plugged into the second slot (150), wherein the second external member (160) comprises a solid-state drive, an m.2-SATA riser card, or an m.2-USB riser card.

7. The display card module (100) according to claim 5, wherein a channel of the gold finger assembly (111) is PCI-E x16, a channel of the first portion (111a) is PCI-E x8, a channel of the second portion (111b) is PCI -E x4, and a channel of the third portion (111c) is PCI-E x4.

8. An electronic device (10), comprising:
a motherboard (200) comprising a PCI-E slot (210), wherein setting of a PCI-E interface in a basic input/output system (BIOS) of the motherboard (200) is selectively adjusted to a first mode or a second mode; and
a display card module (100) pluggably connected to the PCI-E slot (210) and comprising:
a display card body (110) comprising a gold finger assembly (111), wherein the gold finger assembly (111) comprises a first portion (111a) and a second portion (111b);
a graphics processor (120) disposed on the display card body (110) and electrically connected to the first portion (111a); and
a first slot (130) disposed on the display card body (110) and electrically connected to the second portion (111b).

9. The electronic device (10) according to claim 8, wherein the first slot (130) is an m.2 slot.

10. The electronic device (10) according to claim 8, further comprising a first external member (140) detachably plugged into the first slot (130), wherein the first external member (140) comprises a solid-state drive, an m.2-SATA riser card, or an m.2-USB riser card.

11. The electronic device (10) according to claim 8, wherein a channel of the gold finger assembly (111) is PCI-E x16, a channel of the first portion (111a) is PCI-E x8, and a channel of the second portion (111b) is PCI-E x4 or PCI-E x8.

12. The electronic device (10) according to claim 8, wherein the display card module (100) further comprises a second slot (150) disposed on the display card body (110), the gold finger assembly (111) comprises a third portion (111c), the second slot (150) is electrically connected to the third portion (111c), and setting of the PCI-E interface in the basic input/output system (BIOS) of the motherboard (200) is selectively adjusted to a third mode.

13. The electronic device (10) according to claim 12, wherein the display card module (100) further comprises a second external member (160) detachably plugged into the second slot (150), and the second external member (160) comprises a solid-state drive, an m. 2-SATA riser card, or an m.2-USB riser card.
